# EUROPEAN PATENT APPLICATION

(11) **EP 4 468 074 A1**
(43) Date of publication of application: **27.11.2024**
(21) Application number: 24173710.5
(22) Date of filing: 02.05.2024
(51) Int. Cl.: G02F 1/155, G02F 1/163

(54) **ELECTROCHROMIC DEVICE AND METHOD OF OPERATING SAID DEVICE**

(30) Priority: 24.05.2023 US 202363504161 P; 22.09.2023 US 202363584652 P
(71) Applicant: Saint-Gobain Glass France, 92400 Courbevoie (FR)
(72) Inventor: NEWCOMB, Robert, MINNEAPOLIS, MN 55406 (US); VANDERVEEN, Cody, FARIBAULT, MN 55021 (US); WANG, Yan, LAKEVILLE, MN 55044 (US); CHEVALLIER, Théo, MINNEAPOLIS, MN 55413 (US); GIRON, Jean-Christophe, EDINA, MN 55436 (US); BOCEK, Peter, BURNSVILLE, MN 55337 (US)
(74) Representative: Saint-Gobain Recherche

(57) **Abstract**

An apparatus is disclosed. The apparatus can include an electroactive device (124) configured to switch and maintain a continuously graded transmission state from a first orientation to a second orientation, where the first orientation is different to the second orientation.

## Description

### BACKGROUND

The present disclosure is directed to electroactive devices, and more specifically to apparatuses including electrochromic devices and method of using the same.

An electrochromic device can reduce the amount of sunlight entering a room or passenger compartment of a vehicle. Conventionally, an electrochromic device can be at a particular transmission state. For example, the electrochromic device may be set to a certain tint level (i.e., a percentage of light transmission through the electrochromic device), such as full tint (e.g., 0% transmission level), full clear (e.g., 63% +/- 10% transmission level), or a set tint level (or transmission level) in between the two. However, applying a voltage profile to one IGU to produce a tint level in the IGU does not mean that applying the same voltage profile to another IGU will produce a similar tint level. Further improvement in control regarding tinting of an electrochromic device is desired.

### BRIEF DESCRIPTION OF THE DRAWINGS

Embodiments are illustrated by way of example and are not limited in the accompanying figures.
FIG. 1A includes an illustration of a top view of an electroactive device, according to an embodiment.
FIG. 1B includes an illustration of a top view of an electroactive device, according to an embodiment.
FIG. 1C includes an illustration of a top view of an electroactive device, according to an embodiment.
FIG. 2 includes an illustration of a cross-sectional view of an electroactive device, according to one embodiment.
FIG. 3A includes an illustration of a cross-sectional view along line A of an electroactive device, according to one embodiment.
FIG. 3B includes an illustration of a cross-sectional view along line B of an electroactive device, according to one embodiment.
FIGs. 4A-4C include illustrations of top views of an electroactive device, according to various embodiments.
FIG. 5 includes an illustration of a cross-sectional of an insulated glass unit (IGU).

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes," "including," "has," "having," or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise.

When referring to variables, the term "steady state" is intended to mean that an operating variable is substantially constant when averaged over 10 seconds, even though the operating variable may be changed during a transient state. For example, when in steady state, an operating variable may be maintained within 10%, within 5%, or within 0.9% of an average for the operating variable for a particular mode of operation for a particular device. Variations may be due to imperfections in an apparatus or supporting equipment, such as noise transmitted along voltage lines, switching transistors within a control device, operating other components within an apparatus, or other similar effects. Still further, a variable may be changed for a microsecond each second, so that a variable, such as voltage or current, may be read; or one or more of the voltage supply terminals may alternate between two different voltages (e.g., V1 and V2) at a frequency of 1 Hz or greater. Thus, an apparatus may be at steady state even with such variations due to imperfections or when reading operating parameters. When changing between modes of operation, one or more of the operating variables may be in a transient state. Examples of such variables can include voltages at particular locations within an electroactive device or current flowing through the electroactive device.

The use of the word "about", "approximately", or "substantially" is intended to mean that a value of a parameter is close to a stated value or position. However, minor differences may prevent the values or positions from being exactly as stated. Thus, differences of up to ten percent (10%) for the value are reasonable differences from the ideal goal of exactly as described. A significant difference can be when the difference is greater than ten percent (10%).

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the glass, vapor deposition, and electroactive arts.

Many different patterns for the transmission states of an electroactive device, in particular an electrochromic device, can be achieved by the proper selection of bus bar location, the number of voltage supply terminals coupled to each bus bar, locations of voltage supply terminals along the bus bars, or any combination thereof. Varying locations of the bus bars can provide voltages that can range from fully clear (highest transmission or fully bleached) to fully tinted (lowest transmission state), or anything in between. The electrochromic device can be used as part of a window for a building or a vehicle or other applications that can benefit from a controllable tinting, such as partitions that separate living spaces or office spaces. The electrochromic device can be used within an apparatus. The apparatus can further include an energy source, an input/output unit, and a control device that controls the electrochromic device. Components within the apparatus may be located near or remotely from the electrochromic device. In an embodiment, one or more of such components may be integrated with environmental controls within a building.

An electrochromic device can operate with voltages on bus bars being in a range of 0 V to 50 V. In one embodiment, the voltages can be between 0 V and 25 V. In another embodiment, the voltages can be between 0 V and 10 V. In yet another embodiment, the voltages can be between 0 V and 3 V. Such description is used to simplify concepts as described herein. Other voltages may be used with the electrochromic device, such as if the composition or thicknesses of layers within an electrochromic stack are changed. The voltages on bus bars may both be positive (0.1 V to 50 V), both negative (-50 V to -0.1 V), or a combination of negative and positive voltages (-1 V to 2 V), as the voltage difference between bus bars are more important than the actual voltages. Furthermore, the voltage difference between the bus bars may be less than or greater than 50 V. Embodiments described herein are exemplary and not intended to limit the scope of the appended claims.

When controlling the tint profile of an electrochromic device (ECD) in an insulated glass unit (IGU), a voltage profile can be applied to the bus bars of the ECD to produce a desired tint level. A tint profile can be fully clear (highest transmission or fully bleached) to fully tinted (lowest transmission state), or anything in between, and can also be a substantially uniform across all of the area of the ECD. However, constant development is needed to ensure that the electrochromic device continues to switch from one tint profile to another tint profile with relative quickness or speed, that process is simplistic for an end user, and that the tint profiles consume less energy than has been seen before.

The current disclosure provides an IGU system with an electrochromic device that alleviates or at least minimizes the issues associated with varied performance characteristics.

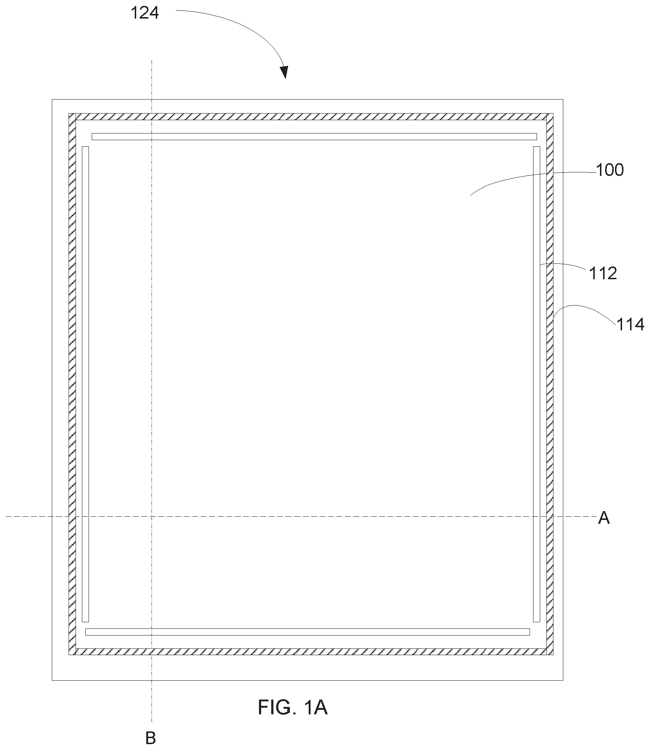

FIG. 1A includes an illustration of a top view of an electroactive device, i.e., an electrochromic device 124, according to one embodiment. Many various shaped IGUs and thus various shaped ECDs 124 are disclosed in the U.S. Provisional Patent Application No. 62/786,603 which is incorporated herein in its entirety by this reference and each of the IGUs, substrates, and ECDs, disclosed in this referenced provisional patent application can benefit from the aspects of this disclosure. While the disclosure describes specific layers of the electroactive devices capable of a gradient transmission state, the disclosure and methods described herein are applicable to any electroactive device with similar or comparable layers, including those devices disclosed in U.S. Patent Application Publication No. 2002/0075552, U.S. Patent Application Publication No. 2016/0202588, and U.S. Patent Application Publication No. 2019/0270284. The electrochromic device 124 can include a substrate 100, a stack of layers of an electrochromic device, and bus bars, according to one embodiment. In one embodiment, the electrochromic device 124 can be further processed into a laminate device. In another embodiment, the electrochromic device 124 can be further processed into an insulated glazing unit.

A first bus bar 114 may be adjacent to all sides of the substrate 100, and a second bus bar 112 can be adjacent all sides of the substrate 100. In a particular embodiment, at least one segment of the first bus bar 114 may be adjacent each and all sides of the electrochromic device 124. In another embodiment, at least one segment of the first bus bar 114 may be adjacent and closer to all sides of the electrochromic device 124 than the second bus bar 112. In one embodiment, the second bus bar 112 is closer to a center of the substrate 100 than the first bus bar 114. In one embodiment, the first bus bar 114 can be closer to all edges of the substrate 100 than the second bus bar 112. In one embodiment, the first bus bar 114 can have at least one segment adjacent each edge of the electrochromic device 124. The electrochromic device 124 can have a first side, a second side opposite the first side, a third side orthogonal to the first side, and a fourth side opposite the third side. In one embodiment, the first bus bar 114 is closer to the first side, the second side, the third side, and the fourth side of the electrochromic device 124 than the second bus bar 112. Each of the bus bars 112 and 114 can have lengths that extend a majority of the distance of each side of the substrate 100. In one embodiment, the first bus bar 114 and the second bus bar 112 can generally mirror each other or be parallel to one another. As used herein, substantially parallel is intended to mean that the two bus bars can be within 10 degrees of each other, such as within 5 degrees of each other, such as within 4 degrees of each other, such as within 2 degrees of each other, or such as within 1 degree of each other.

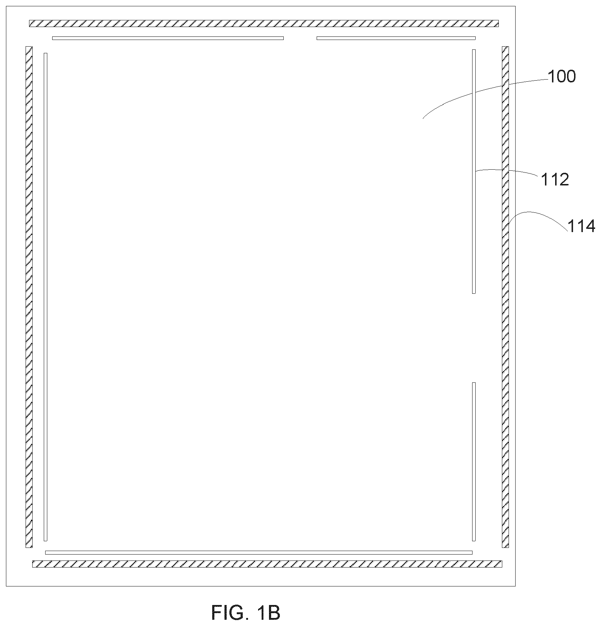

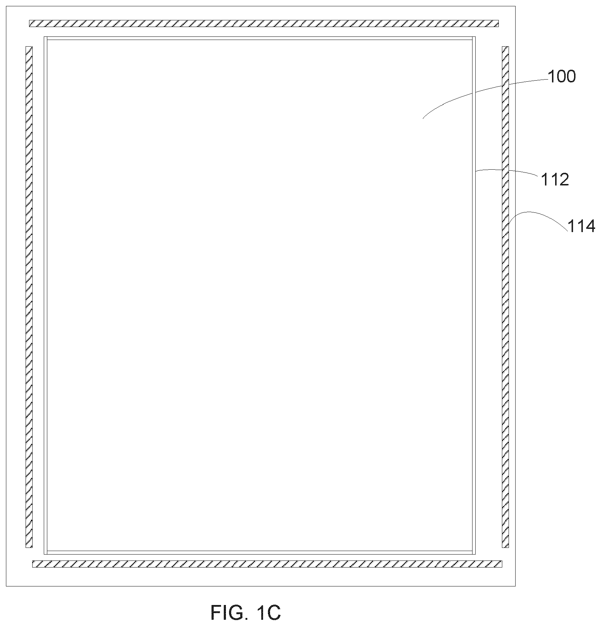

In one embodiment, the second bus bar 112 can include continuous segments, as seen in FIG. 1C. In another embodiment, the second bus bar 112 can include four or more discontinuous segments, as seen in FIG. 1B. In such an embodiment, all of the four or more discontinuous segments of the second bus bar 112 can be connected to the second conductive layer 110. In one embodiment, the four or more discontinuous segments of the first bus bar 114 can be adjacent to or circumscribe all sides of the substrate 100. In another embodiment, the first bus bar 114 can include four or more discontinuous segments, as seen in FIG. 1C. Each of the four or more segments of the first bus bar 114 can be closer to the edges of the substrate 100 than each of the segments of the second bus bar 112. The number of segments of the bus bars is not limited to the configuration as shown in FIG. 1B or FIG. 1C. The first bus bar 114 can include more than four segments, such as more than five segments, such as more than ten segments, or more than 20 segments. The second bus bar 112 can include more than four segments, such as more than five segments, such as more than ten segments, or more than 20 segments.

In one embodiment, each bus bar 112 and 114 can have one voltage supply terminal. The ability to control each voltage supply terminal provides for control over grading of light transmission through the electrochromic device 124.

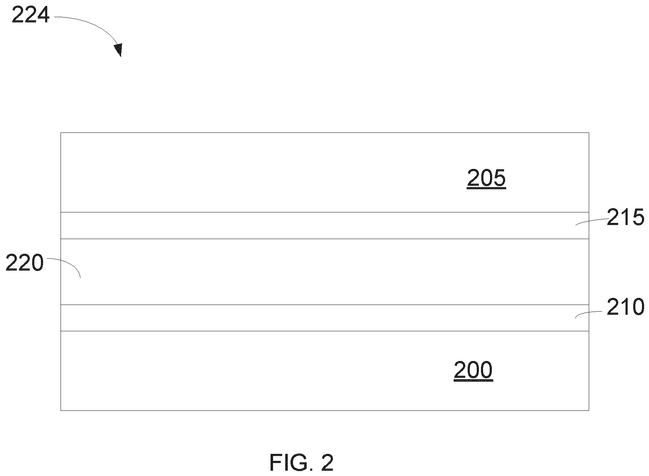

FIG. 2 includes an illustration of a cross-sectional view of an electroactive device 224, according to one embodiment. The electroactive device 224 can include a first substrate 200, a second substrate 205, a first electroconductive layer 210, a second electroconductive layer 215, and an electroactive layer 220. The electroactive layer 220 can be between the first electroconductive layer 210 and the second electroconductive layer 215. The first electroconductive layer 210 can be between the first substrate 200 and the electroactive layer 220. The second electroconductive layer 215 can be between the second substrate 205 and the electroactive layer 220.

In one embodiment, the first electroconductive layer 210 and the second electroconductive layer 215 can each include a conductive metal oxide or a conductive polymer. Examples can include a indium oxide, tin oxide or a zinc oxide, either of which can be doped with a trivalent element, such as Sn, Sb, Al, Ga, In, or the like, or a sulfonated polymer, such as poly(3,4-ethylenedioxythiophene), or the like or sulfonated polyaniline and polypyrrole, or one or several metal layer(s) or a metal mesh or a nanowire mesh or graphene or carbon nanotubes or a combination thereof. The electroconductive layers 210 and 215 can have the same or different compositions.

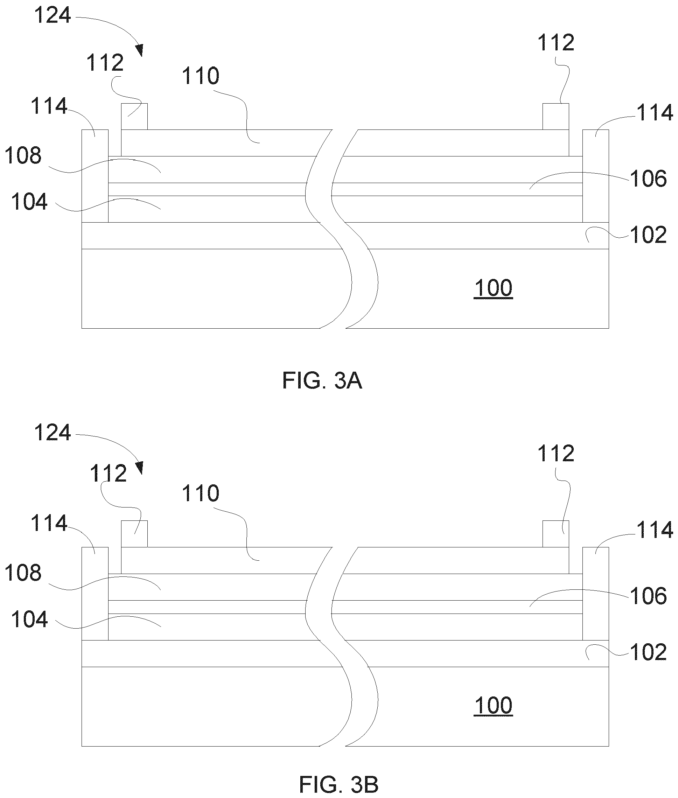

In one embodiment, the electroactive layer 220 can include a liquid crystal and dye material. In one embodiment, the electroactive layer 220 can include an electrochromic medium. In one embodiment, the electroactive layer 220 can include a cathodic electroactive layer and an anodic electroactive layer, as described with respect to FIGs. 3A and 3B. In one embodiment, the electroactive device 224 can be an electrochromic device. In another embodiment, the electroactive device can have more or less layers than the electrochromic device described in FIGs. 3A and 3B. The first substrate 200 and the second substrate 205 can each include a glass substrate, a sapphire substrate, an aluminum oxynitride substrate, a spinel substrate, or a transparent polymer. The first substrate 200 and the second substrate 205 can have the same or different compositions.

As will be discussed in more detail below with respect to FIG. 3A and FIG. 3B, the first bus bar 114 can be electrically connected to a first conductive layer while the second bus bar 112 can be connected to a second conductive layer.

FIG. 3A includes an illustration of a cross-sectional view along line A of a portion of a substrate 100, a first conductive layer 102, a cathodic electroactive layer 104, an ion conducting layer 106, a counter electrode layer 108 (or anodic electroactive layer), a second conductive layer 110, a first bus bar 114, and a second bus bar 112, according to one embodiment. FIG. 3B includes an illustration of a cross-sectional view along line B of a portion of the substrate 100, the first conductive layer 102, the cathodic electroactive layer 104, the ion conducting layer 106, the counter electrode layer 108, the second conductive layer 110, the first bus bar 114, and the second bus bar 112, according to one embodiment. FIGs. 3A and 3B could include additional layers not shown. Although not shown, FIGs. 3A and 3B could include a second substrate, where the second conductive layer 110 is between the second substrate and the first substrate 100.

In one embodiment, the ion conducting layer 106 can be between the cathodic electroactive layer 104 and counter electrode layer 108. In another embodiment, the ion conducting layer 106, cathodic electroactive layer 104, and counter electrode layer 108 can be between the first conductive layer 102 and the second conductive layer 110. In a particular embodiment, the first bus bar 114 can be electrically connected to the second conductive layer 110 and the second bus bar 112 can be electrically connected to the first conductive layer 102.

The substrate 100 can include a glass substrate, a sapphire substrate, an aluminum oxynitride substrate, a spinel substrate, or a transparent polymer. In a particular embodiment, the substrate 100 can be float glass or a borosilicate glass and have a thickness in a range of 0.025 mm to 4 mm thick. In another particular embodiment, the substrate 100 can include ultra-thin glass that is a mineral glass having a thickness in a range of 10 microns to 300 microns. In one embodiment, the first conductive layer 102 can be deposited on the substrate.

The cathodic electroactive layer 104 and the anodic electroactive layer 108 can be electrode layers. In one embodiment, the cathodic electroactive layer 104 can be an electrochromic layer. In another embodiment, the anodic electroactive layer 108 can be a counter electrode layer. The cathodic electroactive layer 104 can include an inorganic metal oxide electroactive active material, such as WO₃, V₂O₅, MoOs, Nb₂O₅, TiO₂, CuO, Ir₂O₃, Cr₂O₃, Co₂O₃, Mn₂O₃, or any combination thereof and have a thickness in a range of 20 nm to 2000 nm. The counter electrode layer 108 can include any of the materials listed with respect to the cathodic electroactive layer 104 and may further include nickel oxide (NiO, Ni₂O₃, or a combination of the two) or iridium oxide, and Li, Na, H, or another ion and have a thickness in a range of 20 nm to 1000 nm.

The ion conductive layer 106 (sometimes called an electrolyte layer) can be optional and can have a thickness in a range of 1 nm to 1000 nm in case of an inorganic ion conductor or 5 microns to 1000 microns in case of an organic ion conductor. The ion conductive layer 106 can include a silicate with or without lithium, aluminum, zirconium, phosphorus, boron; a borate with or without lithium; a tantalum oxide with or without lithium; a lanthanide-based material with or without lithium; another lithium-based ceramic material particularly LixMOyNz where M is one or a combination of transition metals or the like.

The first conductive layer 102 and second conductive layer 110 can include a conductive metal oxide or a conductive polymer. Examples can include an indium oxide, tin oxide or a zinc oxide, either of which can be doped with a trivalent element, such as Sn, Sb, Al, Ga, In, or the like, or a sulfonated polymer, such as poly(3,4-ethylenedioxythiophene), or the like, or sulfonated polyaniline, polypyrrole, or one or several metal layer(s) or a metal mesh or a nanowire mesh or graphene or carbon nanotubes or a combination thereof. The conductive layers 102 and 110 can have the same or different compositions.

The first bus bar 114 can be electrically connected to the second conductive layer 110. The second bus bar 112 can be electrically coupled to the 2 layer 102. In one embodiment, the first bus bar 114 can be a non-penetrating bus bar. In another embodiment, the first bus bar 114 can be separated from the second bus bar 112 by a gap, such as an isolation cut. The conductive layers can have a linear resistance (ohms/meter) that is approximately ten times the linear resistance of the bus bars. Gaps between bus bars can allow the conductive layer to act as a resistor between the gaps and allow a continuously graded state to be maintained in the gaps under the bus bars.

In a particular embodiment, the first bus bar 114 and the second bus bar 112 are electrically isolated from one another. As seen in FIGs. 3A and 3B, the second bus bar 112 can encompass the first bus bar 114. In one embodiment, the first bus bar 114 and the second bus bar 112 are on the same substrate 100. The cross-section of the electrochromic device 124 along line A can be substantially similar to the cross-section of the electrochromic device 124 along line B. In one embodiment, the second bus bar 112 completely surrounds the first bus bar 114. In another embodiment, the second bus bar 112 can be closer to all edges of the electrochromic device 124, and in particular to all outer edge of the substrate 100, than the first bus bar 114. In one embodiment, the second bus bar 112 can be exterior to the first bus bar 114. In another embodiment, the first bus bar 114 can be parallel to the second bus bar 112 along each side of the four sides of the electrochromic device 124. In another embodiment, each segment of the first bus bar 114 can be parallel to each segment of the second bus bar 112 along all sides of the electrochromic device 124. In one embodiment, each edge of the electrochromic device 124 contains a segment of the first bus bar 114 and a segment of the second bus bar 112.

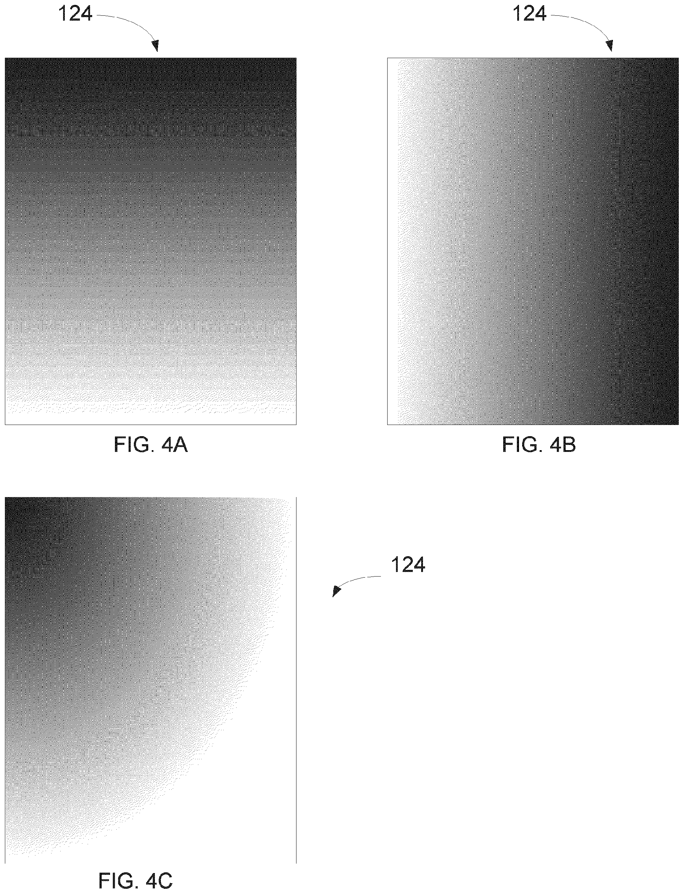

During operation, the first bus bar 114 can be at a fixed potential, such as 0V, and the second bus bar 112 can have its voltages selected to achieve a desired light transmission state. In another embodiment, the first bus bar 114 can have a first voltage on a first side and a different voltage potential on a second side, where the first side is opposite the second side. In another embodiment, the second bus bar 112 can be at a fixed potential and the first bus bar 114 can have its voltages selected to achieve a desired light transmission. In one embodiment, the desired light transmission state can be a graded transmission state. In one embodiment, as seen in FIG. 4A, the graded transmission state can go from tint to clear from the top of the electrochromic device 124 to the bottom of the electrochromic device 124. During operation, in one embodiment, the tint state can go from being darkest on a first side and lightest on a second side (i.e. a horizontal tint) where the first side is opposite the second side, to being darkest on a third side and lightest on a fourth side (i.e. a vertical tint) where the third side is orthogonal to the first side. In another embodiment, as seen in FIG. 4B, the graded transmission state can go from clear to tint from the left to the right of the electrochromic device 124. In yet another embodiment, as seen in FIG. 4C, the graded transmission state can be diagonal on the electrochromic device 124.

During operation, the gradient transmission state can switch from one orientation to a second orientation. For example, in one embodiment, the transmission state can go from being maintained at a continuous gradient transmission that is oriented from top to bottom, as seen in FIG. 4A, to being maintained at a continuous gradient transmission state that is left to right, as seen in FIG. 4B. In another embodiment, the transmission state of the electrochromic device 124 can go from a continuous gradient transmission state that is being maintained in an orientation from top to bottom to a continuous gradient transmission state that is being maintained in an orientation that is non-parallel to any side of the electrochromic device, such as diagonal, as seen in FIG. 4C. In yet another embodiment, the transmission state of the electrochromic device 124 can go from a continuous gradient transmission state that is oriented from left to right to a continuous gradient transmission state that is diagonal. In another embodiment, the transmission state of the electrochromic device 124 can go from a continuous gradient transmission state that is oriented from left to right to a continuous gradient transmission state that is top to bottom. The orientation of the continuous gradient transmission state can depend on the voltages applied to the first bus bar 114 and the second bus bar 112.

In a particular embodiment, a method of operating the electrochromic device 124 can include maintaining the apparatus at a continuously graded transmission state, where the continuously graded transmission state is from top of the apparatus to bottom of the apparatus, switching the transmission state of the apparatus from the continuously graded transmission state that is top to bottom to a continuously graded transmission state that is from left to right of the electrochromic device 124, and maintaining the electrochromic device 124 at the continuously graded transmission state that is from left to right. In one embodiment, switching the electrochromic device can include biasing the first bus bar 114 to a first voltage and biasing the second bus bar 112 to a second voltage different from the first voltage. In a particular embodiment, the first voltage can be at a fixed potential of 0V.

In one embodiment, the voltage applied to the first bus bar 114 can be different from the voltage applied to the second bus bar 112. In one embodiment, the voltage applied to the first bus bar 114 is less than the voltage applied to the second bus bar 112. In one embodiment, to create a graded transmission state from top to bottom in the electrochromic device 124, a voltage of the first segment of the first bus bar 114 can be between 0V and 2V, a voltage of the second segment of the first bus bar 114 can be between 0V and 2V, a voltage of the third segment of the first bus bar 114 can be between 0V and 2V, the voltage of the fourth segment of the first bus bar 114 can be between 0V and 2V and a voltage of the second bus bar 112 can be 0V, where the voltage of the first segment is greater than the voltage of the second segment, third segment, and fourth segment. In another embodiment, to create a graded transmission state from left to right in the electrochromic device 124, a voltage of the first segment of the first bus bar 114 can be between 0V and 2V, a voltage of the second segment of the first bus bar 114 can be between 0V and 2V, a voltage of the third segment of the first bus bar 114 can be between 0V and 2V, the voltage of the fourth segment of the first bus bar 114 can be between 0V and 2V and a voltage of the second bus bar 112 can be 0V, where the voltage of the second segment is greater than the voltage of the first segment, the third segment, and the fourth segment. In another embodiment, to create a graded transmission state in a diagonal in the electrochromic device 124, a voltage of the first segment of the first bus bar 114 can be between 0V and 2V, a voltage of the second segment of the first bus bar 114 can be between 0V and 2V, a voltage of the third segment of the first bus bar 114 can be about 0V, the voltage of the fourth segment of the first bus bar 114 can be about 0V and a voltage of the second bus bar 112 can be 0V, where the voltage of the first segment and the voltage of the second segment are greater than both the voltage of the third segment and the fourth segment.

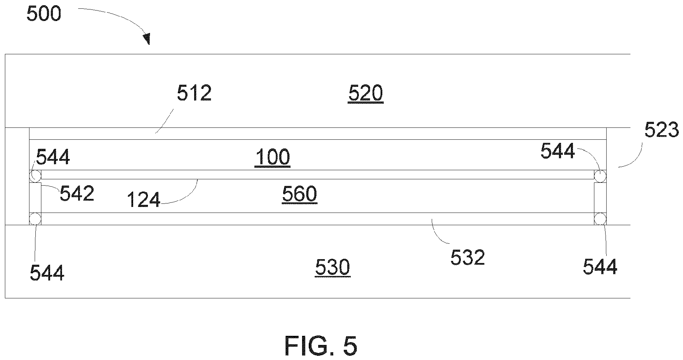

FIG. 5 includes an illustration of a cross-sectional view of an insulated glass unit (IGU) 500. The insulated glass unit (IGU) 500 can include a substrate 100 and the electrochromic device 124 as illustrated in FIGS. 1A-1C. The IGU 500 can further include a support substrate 520 and a solar control film 512 disposed between the electrochromic device 124 and the support substrate 520. The support substrate 520 can be coupled to a pane 530. Each of the support substrate 520 and pane 530 can be a toughened or a tempered glass and have a thickness in a range of 2 mm to 9 mm. A low-emissivity layer 532 can be disposed along an inner surface of the pane 530. The support substrate 520 and pane 530 can be spaced apart by a spacer bar 542. The spacer bar 542 can be coupled to the support pane 530 and substrate 100 via seals 544. The seals 544 can be a polymer, such as polyisobutylene. An adhesive joint 523 is designed to hold the support substrate 520 and the pane 530 together and is provided along the entire circumference of the edges of the support substrate 520 and the pane 530. The adhesive joint 523 can include silicone. An internal space 560 of the IGU 500 may include a relatively inert gas, such as a noble gas or dry air. In another embodiment, the internal space 560 may be evacuated.

The IGU can include an energy source, a control device, and an input/output (I/O) unit. The energy source can provide energy to the electrochromic device 124 via the control device. In an embodiment, the energy source may include a photovoltaic cell, a battery, another suitable energy source, or any combination thereof. The control device can be coupled to the electrochromic device and the energy source. The control device can include logic to control the operation of the electrochromic device. The logic for the control device can be in the form of hardware, software, or firmware. In an embodiment, the logic may be stored in a field programmable gate array (FPGA), an application-specific integrated circuit (ASIC), or another persistent memory. In an embodiment, the control device may include a processor that can execute instructions stored in memory within the control device or received from an external source. The I/O unit can be coupled to the control device. The I/O unit can provide information from sensors, such as light, motion, temperature, another suitable parameter, or any combination thereof. The I/O unit may provide information regarding the electrochromic device 124, the energy source, or control device to another portion of the apparatus or to another destination outside the apparatus.

It should be understood that any of the preceding embodiments can yield a tint profile that can be fully clear (highest transmission or fully bleached) to fully tinted (lowest transmission state), a continuously graded transmission state (with a portion being bleached towards a portion in the highest transmission state) or anything in between. The tint profile can also be a substantially uniform transmission state across all of the area of the electrochromic device 124, a continuously graded transmission state across all of the area of the electrochromic device 124, or with a combination of a portion with a substantially uniform transmission state and another portion with a continuously graded transmission state.

Many different aspects and embodiments are possible. Some of those aspects and embodiments are described below. Exemplary embodiments may be in accordance with any one or more of the ones as listed below.

### EMBODIMENTS

Embodiment 1. An apparatus is disclosed. The apparatus can include an electroactive device configured to switch and maintain a continuously graded transmission state from a first orientation to a second orientation, where the first orientation is different to the second orientation.

Embodiment 2. The apparatus of embodiment 1, where the first orientation is horizontal.

Embodiment 3. The apparatus of embodiment 1, where the first orientation is vertical.

Embodiment 4. The apparatus of embodiment 2, where the second orientation is non-parallel to any side of the apparatus.

Embodiment 5. The apparatus of embodiment 1, where the first orientation is non-parallel to any side of the apparatus.

Embodiment 6. The apparatus of embodiment 2, where the second orientation is horizontal.

Embodiment 7. The apparatus of embodiment 2, where the second orientation is vertical.

Embodiment 8. The apparatus of embodiment 2, where the second orientation is non-parallel.

Embodiment 9. An apparatus, can include: a first conductive layer; a second conductive layer; a first electroactive material between the first conductive layer and the second conductive layer; a first bus bar electrically coupled to the first conductive layer, where the first bus bar has at least one segment that is adjacent to each edge of the apparatus; and a second bus bar electrically coupled to the second conductive layer, where the second bus bar has at least one segment that is adjacent to each edge of the apparatus, and where the first bus bar is closer to all sides of the apparatus than the second bus bar, where the apparatus is configured to switch and maintained at a continuously graded transmission state.

Embodiment 10. The apparatus of embodiment 9, where the first electroactive layer is one of an anodic electroactive layer or a cathodic electroactive layer.

Embodiment 11. The apparatus of embodiment 10, further can include a second electroactive layer, where the second electroconductive layer is the other of the anodic electroactive layer or the cathodic electroactive layer.

Embodiment 12. The apparatus of embodiment 10, further can include a first substrate, where the first electroactive layer is between the second conductive layer and the first substrate.

Embodiment 13. The apparatus of embodiment 12, further can include a second substrate, where the first conductive layer and the second conductive layer is between the first substrate and the second substrate.

Embodiment 14. The apparatus of embodiment 9, where the first bus bar can include at least four segments and where at least one segment of the four segments is adjacent to each edge of the apparatus.

Embodiment 15. The apparatus of embodiment 14, where the at least four segments of the first bus bar are discontinuous.

Embodiment 16. The apparatus of embodiment 9, where the second bus bar can include at least four segments and where at least one segment of the four segments is adjacent to each edge of the apparatus.

Embodiment 17. The apparatus of embodiment 16, where the at least four segments of the first bus bar are continuous.

Embodiment 18. The apparatus of embodiment 9, where the first bus bar and the second bus bar are on a single substrate.

Embodiment 19. The apparatus of embodiment 9, where the first bus bar is exterior to the second bus bar.

Embodiment 20. The apparatus of embodiment 9, where the apparatus can include a first side, a second side opposite the first side, a third side orthogonal to the first side, and a fourth side opposite the third side.

Embodiment 21. The apparatus of embodiment 9, further can include an ion conducting layer between the anodic electroactive layer and the cathodic electroactive layer.

Embodiment 22. The apparatus of embodiment 9, where the first bus bar is closer to the first side, the second side, the third side, and the fourth side of the apparatus than the second bus bar.

Embodiment 23. The apparatus of embodiment 13, where the first substrate and the second substrate can include a material selected from the group consisting of glass, sapphire, aluminum oxynitride, spinel, polyacrylic compound, polyalkene, polycarbonate, polyester, polyether, polyethylene, polyimide, polysulfone, polysulfide, polyurethane, polyvinyl acetate, another suitable polymer, co-polymer of the foregoing, float glass, borosilicate glass, and any combination thereof.

Embodiment 24. The apparatus of embodiment 9, further can include a cathodic electroactive layer, where the cathodic electroactive layer can include an electrochromic material selected from the group consisting of WO₃, V₂O₅, MoOs, Nb₂O₅, TiO₂, CuO, Ni₂O₃, NiO, Ir₂O₃, Cr₂O₃, Co₂O₃, Mn₂O₃, mixed oxides (e.g., W-Mo oxide, W-V oxide), lithium, aluminum, zirconium, phosphorus, nitrogen, fluorine, chlorine, bromine, iodine, astatine, boron, a borate with or without lithium, a tantalum oxide with or without lithium, a lanthanide-based material with or without lithium, another lithium-based ceramic material, or any combination thereof.

Embodiment 25. The apparatus of embodiment 9, where the first conductive layer can include a material selected from the group consisting of indium oxide, indium tin oxide, doped indium oxide, tin oxide, doped tin oxide, zinc oxide, doped zinc oxide, ruthenium oxide, doped ruthenium oxide, silver, gold, copper, aluminum, and any combination thereof.

Embodiment 26. The apparatus of embodiment 9, where the second conductive layer can include a material selected from the group consisting of indium oxide, indium tin oxide, doped indium oxide, tin oxide, doped tin oxide, zinc oxide, doped zinc oxide, ruthenium oxide, doped ruthenium oxide, silver, gold, copper, aluminum, and any combination thereof.

Embodiment 27. The apparatus of embodiment 9, further can include an anodic electroactive layer, where the anodic electroactive layer can include a material selected from the group consisting of an inorganic metal oxide electroactive active material, such as WO₃, V₂O₅, MoO₃, Nb₂O₅, TiO₂, CuO, Ir₂O₃, Cr₂O₃, Co₂O₃, Mn₂O₃, Ta₂O₅, ZrO₂, HfO₂, Sb₂O₃, a lanthanide-based material with or without lithium, another lithium-based ceramic material, a nickel oxide (NiO, Ni2O3, or combination of the two), and Li, nitrogen, Na, H, or another ion, any halogen, and any combination thereof.

Embodiment 28. A method of operating an apparatus can include: maintaining the apparatus at a continuously graded transmission state, where the continuously graded transmission state is in a first orientation of the apparatus; switching the apparatus from the continuously graded transmission state that is in the first orientation to a continuously graded transmission state that is in a second orientation of the apparatus; and maintaining the apparatus at the continuously graded transmission state that is in the second orientation, where the first orientation is different from the second orientation.

Embodiment 29. The method of embodiment 28, further including providing an electroactive device, the electroactive device can include: a first conductive layer; a second conductive layer; a first electroactive layer between the first conductive layer and the second conductive layer; a second electroactive layer between the first conductive layer and the second conductive layer; a first bus bar electrically coupled to the first conductive layer, where at least one segment of the first bus bar is along each and all sides of the apparatus; and a second bus bar electrically coupled to the second conductive layer, where at least one segment of the second bus bar is along each and all sides of the apparatus, and where the second bus bar is exterior to the first bus bar on all sides of the apparatus.

Embodiment 30. The method of embodiment 29, where switching the electroactive device can include biasing the first bus bar to a first voltage and biasing the second bus bar to a second voltage different from the first voltage.

Embodiment 31. The method of embodiment 29, further can include switching the transmission state of the apparatus from the continuously graded transmission state that is in the second orientation to a continuously graded transmission state that is in a third orientation of the apparatus; and maintaining the apparatus at the continuously graded transmission state that is in the third orientation of the apparatus.

Embodiment 32. The method of embodiment 29, where the first orientation of the continuously graded transmission state of the apparatus is horizontal, vertical, or non-parallel to any side of the apparatus.

Embodiment 33. The method of embodiment of 32, where the second orientation of the continuously graded transmission state is horizontal, vertical, or non-parallel to any side of the apparatus, and where the third orientation is the other of the horizontal, vertical, or non-parallel to any side orientations of the continuously graded transmission state of the apparatus.

Embodiment 34. The method of embodiment 30, further can include an ion conducting layer between the anodic electroactive layer and the cathodic electroactive layer.

While the present disclosure may be susceptible to various modifications and alternative forms, specific embodiments have been shown by way of example in the drawings and have been described in detail herein. However, it should be understood that the embodiments are not intended to be limited to the particular forms disclosed. Rather, the disclosure is to cover all modifications, equivalents, and alternatives falling within the spirit and scope of the disclosure as defined by the following appended claims. Further, although individual embodiments are discussed herein, the disclosure is intended to cover all combinations of these embodiments.

Note that not all of the activities described above in the general description or the examples are required, that a portion of a specific activity may not be required, and that one or more further activities may be performed in addition to those described. Still further, the order in which activities are listed is not necessarily the order in which they are performed.

Certain features that are, for clarity, described herein in the context of separate embodiments, may also be provided in combination in a single embodiment. Conversely, various features that are, for brevity, described in the context of a single embodiment, may also be provided separately or in any sub-combination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Separate embodiments may also be provided in combination in a single embodiment, and conversely, various features that are, for brevity, described in the context of a single embodiment, may also be provided separately or in any sub-combination. Further, reference to values stated in ranges includes each and every value within that range. Many other embodiments may be apparent to skilled artisans only after reading this specification. Other embodiments may be used and derived from the disclosure, such that a structural substitution, logical substitution, or another change may be made without departing from the scope of the disclosure. Accordingly, the disclosure is to be regarded as illustrative rather than restrictive.

## Claims

1. An apparatus, comprising:
a first conductive layer (102;210);
a second conductive layer (110; 215);
a first electroactive layer (104;220) between the first conductive layer (102;210) and the second conductive layer (110; 215);
a first bus bar (114) electrically coupled to the first conductive layer (102;210), wherein the first bus bar (114) has at least one segment that is adjacent to each edge of the apparatus; and
a second bus bar (112) electrically coupled to the second conductive layer (110; 215), wherein the second bus bar (112) has at least one segment that is adjacent to each edge of the apparatus, and wherein the first bus bar (114) is closer to all sides of the apparatus than the second bus bar (112), wherein the apparatus is configured to switch and maintain a continuously graded transmission state.

2. The apparatus of claim 1, wherein the first electroactive layer (104) is one of an anodic electroactive layer or a cathodic electroactive layer.

3. The apparatus of claim 2, further comprising a second electroactive layer (108), wherein the second electroconductive layer (108) is the other of the anodic electroactive layer or the cathodic electroactive layer.

4. The apparatus of claim 2, further comprising a first substrate (100), wherein the first electroactive layer (104) is between the second conductive layer (110) and the first substrate (100).

5. The apparatus of claim 4, further comprising a second substrate, wherein the first conductive layer and the second conductive layer are between the first substrate and the second substrate.

6. The apparatus of claim 1, wherein the first bus bar (114) comprises at least four segments and wherein at least one segment of the four segments is adjacent to each edge of the apparatus.

7. The apparatus of claim 6, wherein the at least four segments of the first bus bar (114) are discontinuous.

8. The apparatus of claim 1, wherein the second bus (112) bar comprises at least four segments and wherein at least one segment of the four segments is adjacent to each edge of the apparatus.

9. The apparatus of claim 8, wherein the at least four segments of the second bus bar (112) are continuous.

10. The apparatus of claim 1, wherein the first bus bar (114) and the second bus bar (112) are on a single substrate.

11. The apparatus of claim 1, wherein the first bus bar (114) is exterior to the second bus bar (112).

12. The apparatus of claim 1, wherein the apparatus comprises a first side, a second side opposite the first side, a third side orthogonal to the first side, and a fourth side opposite the third side.

13. The apparatus of claim 1, further comprising an ion conducting layer (106) between the anodic electroactive layer and the cathodic electroactive layer.

14. The apparatus of claim 1, wherein the second bus bar (112) is closer to the first side, the second side, the third side, and the fourth side of the apparatus than the first bus bar (114).

15. A method of operating an apparatus comprising:
maintaining the apparatus at a continuously graded transmission state, wherein the continuously graded transmission state is in a first orientation of the apparatus;
switching the apparatus from the continuously graded transmission state that is in the first orientation to a continuously graded transmission state that is in a second orientation of the apparatus; and
maintaining the apparatus at the continuously graded transmission state that is in the second orientation, wherein the first orientation is different from the second orientation.
